(19) **Europäisches Patentamt / European Patent Office / Office européen des brevets**

(11) **EP 2 195 109 B1**

(12) **FASCICULE DE BREVET EUROPEEN**

(45) Date de publication et mention
de la délivrance du brevet:
**09.12.2015   Bulletin 2015/50**

(21) Numéro de dépôt: **08788997.8**

(22) Date de dépôt: **28.07.2008**

(51) Int Cl.:
**B01F 17/36** (2006.01)          **C09C 1/02** (2006.01)

(86) Numéro de dépôt international:
**PCT/IB2008/002040**

(87) Numéro de publication internationale:
**WO 2009/040616 (02.04.2009 Gazette 2009/14)**

(54) **UTILISATION D'ACIDE PHOSPHORIQUE POUR RÉDUIRE LA QUANTITÉ DE DISPERSANT LIBRE, DANS UN PROCÉDÉ DE CONCENTRATION DE CARBONATE DE CALCIUM DANS L'EAU**

VERWENDUNG VON PHOSPHORSÄURE  ZUR VERMINDERUNG DER MENGE AN FREIEM DISPERGIERMITTEL IN EINEM VERFAHREN IN CALCIUMCARBONATHALTIGEM WASSER

USE OF PHOSPHORIC ACID FOR REDUCING THE AMOUNT OF FREE DISPERSANT IN A METHOD FOR CONCENTRATING CALCIUM CARBONATE IN WATER

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité:  **28.09.2007   FR 0706806**

(43) Date de publication de la demande:
**16.06.2010   Bulletin 2010/24**

(73) Titulaire: **COATEX S.A.S.**
**69730 Genay (FR)**

(72) Inventeurs:
• **JACQUEMET, Christian**
**F-69005 Lyon (FR)**
• **MONGOIN, Jacques**
**F-69650 Quincieux (FR)**

(74) Mandataire: **Regimbeau**
**20, rue de Chazelles**
**75847 Paris Cedex 17 (FR)**

(56) Documents cités:
**EP-A- 0 412 027          EP-A- 0 839 956**
**WO-A-02/49765          WO-A-97/14847**
**WO-A-98/20079          WO-A-03/016217**
**WO-A-2006/081501     FR-A- 2 829 708**
**FR-A- 2 895 686**

**Description**

Le carbonate de calcium est préférentiellement transporté sous forme d'une suspension ou d'une dispersion aqueuse, qui s'avère plus facilement manipulable et notamment pompable, à l'inverse d'une poudre. Un des objectifs de l'homme du métier est de délivrer la plus grande quantité possible de matière minérale (sans pour autant trop faire augmenter la viscosité du milieu), c'est-à-dire d'augmenter l'extrait sec de la dispersion ou de la suspension aqueuse : cet extrait sec correspond au poids sec de matière minérale par rapport au poids total de ladite dispersion ou suspension. On parvient à augmenter cet extrait sec à travers une phase de concentration, correspondant à une évaporation de l'eau par des moyens mécaniques et / ou thermiques.

Dans le cas du carbonate de calcium, cette étape de concentration permet de passer d'un extrait sec de départ au plus égal à 50 %, à un extrait sec final au moins égal à 60 %, et dans certains cas supérieur à 70 %, voire 72 %. Il est alors nécessaire d'ajouter un agent dispersant, dont la fonction est de stabiliser dans l'eau les particules de carbonate de calcium, à haute concentration, sans pour autant augmenter la viscosité du milieu de manière trop importante. De tels agents dispersants sont connus depuis de nombreuses années, et consistent pour la plupart en des homopolymères et des copolymères de l'acide acrylique.

Lorsque l'agent dispersant de nature acrylique est introduit au cours de l'étape de concentration précitée, il agit en s'adsorbant plus ou moins à la surface du carbonate de calcium, et conduit à une stabilisation des particules minérales par des mécanismes électrostatiques. Compte tenu de la composition de ce dispersant acrylique, cette adsorption n'est en générale jamais totale si bien qu'une certaine quantité de dispersant acrylique non adsorbée demeure en phase aqueuse : elle sera désignée à travers l'expression de "dispersant libre". Or, dans la fabrication des sauces de couchage pour papier (ce qui constitue une des applications majeures du carbonate de calcium), cette fraction de dispersant libre est à l'origine d'un problème majeur : la dégradation de l'imprimabilité du papier couché.

En effet, les dispersions et suspensions aqueuses de carbonate de calcium concentrées entrent directement dans la fabrication des sauces de couchage qui, plus tard, servent à coucher la feuille de papier par application sur celle-ci. On retrouve alors dans la phase aqueuse de ladite sauce de couchage la fraction de dispersant libre, non adsorbée à la surface du carbonate de calcium. Après application sur la feuille de papier, la sauce de couchage subit une étape de séchage : le dispersant libre qui est hydrophile, entraîné par l'eau, migre du coeur de la couche vers la surface du papier couché. Ce phénomène est à l'origine d'une modification partielle de l'énergie de surface du papier couché : on dégrade alors l'imprimabilité du papier couché. Afin de limiter cet effet, l'homme du métier cherche à minimiser la quantité de dispersant libre contenu dans les dispersions et suspensions aqueuses de carbonate de calcium.

Cherchant à résoudre ce problème, tout en permettant la concentration de dispersions et de suspensions aqueuses de carbonate de calcium en présence d'un dispersant acrylique, d'une concentration au plus égale à 50 % à une concentration au moins égale à 60 %, tout en leur conférant une viscosité satisfaisante, la Demanderesse a mis au point l'utilisation dans un tel procédé d'une solution d'acide phosphorique. On démontre alors que tout en obtenant un extrait sec et une viscosité au moins égaux à ceux obtenus pour la même dispersion ou suspension ne contenant pas d'acide phosphorique, on parvient à diminuer de manière très significative la fraction de dispersant acrylique libre en phase aqueuse. On contribue ainsi à améliorer l'imprimabilité du papier.

Une telle utilisation de l'acide phosphorique est, dans l'état de nos connaissances, tout à fait nouvelle et particulièrement inventive, tant ce composé était jusqu'alors utilisé de manière routinière par l'homme du métier dans des suspensions aqueuses de matières minérales, avec la seule fonction d'agent tampon : rien ne retenait l'attention de l'homme du métier sur ce composé, comme étant susceptible de réduire la quantité de dispersant libre contenu dans les dispersions et suspensions aqueuses de carbonate de calcium concentrées. A ce titre, il existe tout un pan de la technique dédié à la fabrication de particules de carbonate de calcium dites "résistantes aux acides", ces procédés consistant à introduire dans le milieu aqueux contenant la matière minérale un agent chélatant, ainsi qu'un acide faible qui est en général l'acide phosphorique.

Ce procédé est décrit dans de nombreux brevets (US 5 043 017, US 5 156 719, WO 98 / 29601, WO 97 / 41302) et dans la publication "Neutral groundwood papers : practical and chemical aspects" (International Paper and Coatings Chemistry Symposium, 5th, Montreal, QC, Canada, 16-19 Juin, 2003, Editeur: Pulp and Paper Technical Association of Canada, Montreal, Quebec), d'où il ressort que la fonction de l'acide phosphorique est de stabiliser le pH.

De plus, il convient de ne pas confondre d'un point de vue chimique l'acide phosphorique ($H_3PO_4$), et les composés phosphatés condensés d'autre part, parmi lesquels on distingue les cyclophosphates, les polyphosphates et les phosphates branchés inorganiques ou superphosphates, selon le document "The Chemical Structure and Properties of Condensed Inorganic Phosphates" (The Biochemistry of Inorganic Polyphosphates, I.S. Kulaev, V.M. Vagabov, T.V. Kulakovskaya, 2004 John Wiley & Sons, Ltd ISBN 0-470-85810-9). Ces derniers sont des molécules qui résultent de la condensation de plusieurs molécules phosphatées entre elles, les plus connues étant le tripolyphosphate (TPP), le pyrophosphate et l'hexamétaphosphate (HMP).

Outre cette différence chimique, l'état de la technique relatif aux différents procédés de fabrication de carbonate de calcium en milieu aqueux établit une distinction très claire entre l'acide phosphorique et les composés condensés phosphatés. Jusqu'à aujourd'hui et comme indiqué dans les documents déjà cités, le premier était connu avant tout comme agent stabilisateur du pH des dispersions et des suspensions aqueuses contenant du carbonate de calcium, et les seconds comme agents dispersants de cette matière minérale dans l'eau en combinaison avec des dispersants acryliques, comme présenté dans les documents suivants.

Depuis de nombreuses années, on utilise en effet diverses combinaisons entre un dispersant acrylique et un autre dispersant à base de phosphates condensés ou de leurs sels pour disperser un carbonate de calcium dans l'eau. C'est le cas du pyrophosphate de sodium en association avec un homopolymère de l'acide (méth)acrylique (US 3 661 610), de l'hexamétaphosphate de sodium avec un homopolymère de l'acide (méth)acrylique (JP 62-279834), ou encore du pyrophosphate de sodium et du polyphosphate de sodium avec un polyacrylate de sodium (CN 1 884 085). Dans chacun de ces documents, le composé phosphaté condensé hydrosoluble est présenté comme un agent dispersant qui, en combinaison avec le polymère acrylique, contribue à stabiliser le carbonate de calcium dans l'eau, sans pour autant trop altérer la viscosité du milieu.

De manière évidente, on s'est ensuite rendu compte que ces composés phosphatés condensés, lorsqu'ils étaient mis en oeuvre avec un dispersant acrylique, permettaient de réduire la quantité du polymère acrylique utilisé : l'ajout du second dispersant (phosphaté) sert tout simplement à palier le fait qu'on a réduit la quantité du premier dispersant (acrylique). C'est notamment l'objet du document EP 0 839 956 (combinaison d'un copolymère acrylique / acrylamide avec un composé phosphaté condensé hydrosoluble de type hexamétaphosphate de sodium) et du document WO 2006 / 081501 (combinaison d'un dispersant anionique et d'un dispersant condensé phosphaté tel que lé tripolyphosphate, l'hexamétaphosphate ou le tripolyphosphate de sodium, ou encore le tetrasodium pyrophosphate).

Au sujet de ces 2 derniers documents, il est important de préciser plusieurs choses. Tout d'abord, que l'acide phosphorique n'est pas visé par l'objet de ces brevets ; en effet, les auteurs du document WO 2006 / 081501 indiquent que de l'acide phosphorique peut être utilisé à titre d'agent permettant de contrôler le pH ([020]). Il s'agit de la fonction connue depuis de nombreuses années pour ce composé, et que les auteurs de ce document distinguent donc des dispersants phosphatés condensés visés par leurs revendications. De plus, pour renforcer sa démonstration, la Demanderesse a choisi de tester la solution proposée dans ces 2 documents, à savoir la combinaison d'un dispersant acrylique avec un composé phosphaté condensé hydrosoluble qui est l'hexamétaphosphate de sodium (cité comme un des composés préférés dans ces 2 documents). Les essais démontrent que la quantité de dispersant libre est alors plus importante en présence du composé phosphaté condensé hydrosoluble. Ceci confirme bien que les solutions présentées dans ces documents ne permettent pas de résoudre le problème technique de réduction du taux de dispersant libre.

Sans vouloir être liée à une quelconque théorie, la Demanderesse pense que l'acide phosphorique, lorsqu'il est mis en contact avec le carbonate de calcium par introduction dans la dispersion ou la suspension aqueuse, développe une forte réactivité vis à vis des particules minérales. Il y a alors modification de la surface du carbonate de calcium par réaction avec l'acide phosphorique, et création de sites de haute énergie : on prépare ainsi la surface du minéral transformé à une meilleure adsorption de l'homopolymère et / ou du copolymère de l'acide (méth)acrylique. La quantité de dispersant acrylique non adsorbée (et donc présente sous forme libre en phase aqueuse) s'en trouve ainsi diminuée.

A notre connaissance, il n'existe qu'un seul document permettant de résoudre le même problème technique que celui objet de la présente Demande et qui, à ce titre, devrait être pris comme état de la technique le plus proche dans une analyse de brevetabilité du type problème-solution. Il s'agit du document EP 1 347 835 qui repose sur la mise en oeuvre d'homo- et de copolymères de l'acide (méth)acrylique partiellement acides, et dont on a optimisé les taux de neutralisation par un agent monofonctionnel et un agent bifonctionnel. Sans retirer à cette solution son caractère inventif, cette dernière demeure toutefois limitée au choix d'homo- et de copolymères de l'acide (méth)acrylique particuliers de part leur neutralisation ; or, la présente invention s'applique à un quelconque de ces polymères acryliques, indépendamment de sa neutralisation.

Aussi, le premier objet de la présente invention réside en l'utilisation d'acide phosphorique, dans un procédé de concentration d'une dispersion ou d'une suspension aqueuse de carbonate de calcium en présence d'au moins un dispersant acrylique, comme agent permettant de réduire la quantité de dispersant libre.

Cette utilisation est aussi caractérisée en ce qu'on utilise de 0,05 % à 1 %, préférentiellement de 0,1 % à 0,6 % en poids sec d'acide phosphorique, par rapport au poids sec de carbonate de calcium.

Cette utilisation est aussi caractérisée en ce qu'on utilise de 0,05 % à 1 %, préférentiellement de 0,1 % à 0,6 % en poids sec du dispersant acrylique, par rapport au poids sec de carbonate de calcium.

Cette utilisation est aussi caractérisée en ce que le dispersant acrylique et l'acide phosphorique sont introduits dans la dispersion ou la suspension aqueuse de carbonate de calcium, avant et / ou pendant l'étape de concentration.

Par exemple, l'acide phosphorique peut être introduit pendant une étape de broyage en milieu aqueux du carbonate de calcium, cette étape ayant lieu avant l'étape de concentration précitée.

Cette utilisation est aussi caractérisée en ce que l'acide phosphorique est introduit dans la dispersion ou la suspension aqueuse de carbonate de calcium avant et / ou en même temps que le dispersant acrylique.

Cette utilisation est aussi caractérisée en ce que le dispersant acrylique consiste en au moins un homopolymère de l'acide (méth)acrylique et / ou au moins un copolymère de l'acide (méth)acrylique avec un autre monomère.

Cette utilisation est aussi caractérisée en ce que le carbonate de calcium est choisi parmi un carbonate de calcium naturel, synthétique et leurs mélanges, préférentiellement en ce qu'il est un carbonate de calcium naturel, très préférentiellement en ce qu'il est un carbonate de calcium naturel choisi parmi le marbre, la craie, le calcaire, la calcite et leurs mélanges.

Cette utilisation, est aussi caractérisée en ce que la teneur initiale en poids sec de carbonate de calcium de la dispersion ou de la suspension aqueuse est au plus égale à 50 % de son poids total, et en ce que sa teneur finale en poids sec de carbonate de calcium après concentration est au moins égale à 60 %, préférentiellement 70 %, très préférentiellement 72 % de son poids total.

Selon une première variante, cette utilisation est caractérisée en ce qu'elle a lieu dans un procédé de concentration d'une suspension aqueuse de carbonate de calcium, préalablement obtenue par broyage sans agent de broyage, et ayant une teneur initiale en poids sec de carbonate de calcium au plus égale à 30 % de son poids total.

Selon une deuxième variante, cette utilisation est caractérisée en ce qu'elle a lieu dans un procédé de concentration d'une suspension aqueuse de carbonate de calcium, préalablement obtenue par broyage en présence d'un agent de broyage, et ayant une teneur initiale en poids sec de carbonate de calcium au plus égale à 50 % de son poids total, et au moins égale à 30 % de son poids total.

Cette utilisation est aussi caractérisée en ce que la concentration de la dispersion ou de la suspension aqueuse de carbonate de calcium est réalisée par des moyens mécaniques et / ou thermiques. Toutefois, l'homme du métier pourra mettre en oeuvre toute autre technique de son choix, en vue de procéder à une élimination partielle de l'eau, et donc une augmentation de la concentration du milieu en carbonate de calcium.

Le deuxième objet de l'invention consiste en une dispersion ou une suspension aqueuse de carbonate de calcium, contenant au moins un dispersant acrylique, un agent réducteur de la quantité de dispersant libre consistant en l'acide phosphorique, et caractérisée en ce qu'elle présente un taux de dispersant libre, telle que mesuré par la méthode TOC, inférieure à 40 %, préférentiellement 30 %, très préférentiellement 12 %, et en ce que sa teneur en poids sec de carbonate est au moins légale 72% de son poids total à 60%, préférentiellement 70%, très préferentiellement.

On trouvera une description très détaillée de ladite méthode TOC en introduction des essais.

Cette dispersion ou suspension aqueuse de carbonate de calcium est aussi caractérisée en ce qu'elle contient de 0,05 % à 1 %, préférentiellement de 0,1 % à 0,6 % en poids sec d'acide phosphorique, par rapport au poids sec de carbonate de calcium.

Cette dispersion ou suspension aqueuse de carbonate de calcium est aussi caractérisée en ce qu'elle contient de 0,05 % à 1 %, préférentiellement de 0,1 % à 0,6 % en poids sec du dispersant acrylique, par rapport au poids sec de carbonate de calcium.

Cette dispersion ou suspension aqueuse de carbonate de calcium est aussi caractérisée en ce que le dispersant acrylique consiste en au moins un homopolymère de l'acide (méth)acrylique et / ou au moins un copolymère de l'acide (méth)acrylique avec un autre monomère.

Cette dispersion ou suspension aqueuse de carbonate de calcium est aussi caractérisée en ce que le carbonate de calcium est choisi parmi un carbonate de calcium naturel, synthétique et leurs mélanges, préférentiellement en ce qu'il est un carbonate de calcium naturel, très préférentiellement en ce qu'il est un carbonate de calcium naturel choisi parmi le marbre, la craie, le calcaire, la calcite et leurs mélanges.

Cette dispersion ou suspension aqueuse de carbonate de calcium est aussi caractérisée en ce que sa teneur en poids sec de carbonate de calcium est au moins égale à 60 %, préférentiellement 70 %, très préférentiellement 72 % de son poids total.

**EXEMPLES**

Dans tous les essais, la quantité de dispersant acrylique contenue dans la phase aqueuse des dispersions et des suspensions de carbonate de calcium, encore appelée quantité de dispersant libre, est mesurée par la méthode décrite ci-après, appelée dans la présente demande "méthode TOC".

On commence par déterminer la valeur TOC 1. Cette valeur est en fait mesurée sur une solution aqueuse de polymère acrylique ne contenant pas de carbonate de calcium. Les concentrations en polymère acrylique sont identiques à celles choisies pour les expériences de concentration de la dispersion ou la suspension aqueuse de carbonate de calcium.

La quantité de polymère acrylique présent dans la dispersion ou la suspension aqueuse de carbonate de calcium après concentration de celle-ci, est mesurée après filtration de ladite dispersion ou suspension de carbonate de calcium, à l'aide du même TOC-mètre. On obtient la valeur TOC 2.

La quantité de dispersant libre contenu dans la phase aqueuse de la dispersion ou de la suspension de carbonate de calcium après concentration de celle-ci, est alors donnée par la relation :

$$\text{\% de dispersant libre} = \frac{TOC2}{TOC1} \times 100$$

De manière pratique, la dispersion ou la suspension aqueuse de carbonate de calcium testée est d'abord filtrée sur un filtre-presse "API Fluid Loss Measurement" de la société BAROID™, équipé d'un papier filtre de 90 mm de diamètre (Whatman n° 50) et d'un tamis métallique.

La filtration est effectuée sous une pression de 100 psi (7 bars). Le filtrat obtenu est alors filtré de nouveau sur un filtre Millipore™ de porosité 0,45 $\mu$m.

Les eaux alors obtenues sont analysées à l'aide d'un TOC-mètre thermique TOC-VCSH commercialisé par la société SHIMADZU™ et étalonné avec une solution d'hydrogéno phthalate de potassium.

**Exemple 1**

Cet exemple illustre l'utilisation selon l'invention d'acide phosphorique, comme agent réduisant la quantité de dispersant libre, lorsqu'on concentre une suspension aqueuse d'un carbonate de calcium naturel, qui est un marbre de Norvège.

Cet exemple illustre notamment la mise en oeuvre d'un dispersant acrylique D1 qui est :

- un homopolymère de l'acide acrylique,
- dont 70 % en mole des sites carboxyliques sont neutralisés par la soude et 30 % en mole des sites carboxyliques sont neutralisés par la chaux,
- et de poids moléculaire moyen en masse égal à 5 500 g/mol (tel que déterminé selon la méthode décrite dans le document WO 2007 / 069037).

Cet exemple illustre aussi la variante de l'invention bien connue de l'homme du métier dans laquelle la suspension initiale de carbonate de calcium est issue d'une étape de broyage, sans agent dispersant. Sa teneur initiale en poids sec de carbonate de calcium est égale à 15 % de son poids total et elle contient 73 % et 96 % en poids de particules dont le diamètre est inférieur respectivement à 1 $\mu$m et 2 $\mu$m, tel que mesuré avec un Sedigraph™ 5100 commercialisé par la société MICROMERITICS™.

Dans tout la présente demande, l'homme du métier pourra se reporter au document EP 1 294 476 qui précise les conditions standards d'un tel broyage.

Pour chacun des essais n° 1 à 3, on réalise la concentration de la suspension aqueuse de carbonate de calcium à partir d'une plaque chauffante ayant une puissance de 0,5 KWatt.

Essai n° 1

Cet essai illustre l'art antérieur et met en oeuvré 0,5 % en poids sec du dispersant D1, introduit dans la suspension avant l'étape de concentration.

Essai n° 2

Cet essai illustre l'art antérieur et met en oeuvre 0,5 % en poids sec du dispersant D1, et 0,5 % en poids sec d'un dispersant phosphaté condensé hydrosoluble qui est l'hexamétaphosphate de sodium (composé préféré dans les documents EP 0 839 956 et WO 2006 / 081501), l'hexamétaphosphate de sodium étant introduit en premier et le dispersant D1 en second et ce, avant l'étape de concentration.

Essai n° 3

Cet essai illustre l'invention et met en oeuvre 0,5 % en poids sec du dispersant D1, et 0,5 % en poids sec d'acide phosphorique, l'acide phosphorique étant introduit en premier et le dispersant D1 en second et ce, avant de l'étape de concentration.

Pour chacun des essais, on détermine l'extrait sec final de chaque suspension, de même que ses viscosités Brookfield™ à 10 et 100 tours par minute (notées $\mu$10 et $\mu$100), et le pourcentage de dispersant libre (voir tableau 1).

**Tableau 1**

| Essai n° | 1 | 2 | 3 |
|---|---|---|---|
| Art Antérieur (AA) / Invention (IN) | AA | AA | IN |
| Extrait sec (%) | 62,0 | 67,3 | 67,5 |
| $\mu 10$ (mPa.s) | 15 240 | 1 040 | 140 |
| $\mu 100$ (mPa.s) | 2520 | 330 | 140 |
| Dispersant libre (%) | 60,1 | 78,6 | 32,5 |

Selon l'essai n° 1, on n'est pas parvenu à augmenter l'extrait sec de la suspension aqueuse de carbonate de calcium à plus de 62 %. On remarque de plus que les viscosités Brookfield™ à 10 et à 100 tours par minute sont très élevées, ce qui rend la suspension correspondante relativement visqueuse, et difficilement manipulable.

Selon l'essai n° 2, on a réussi à augmenter l'extrait sec de la suspension aqueuse de carbonate de calcium à une valeur supérieure à 67 %, tout en obtenant des valeurs de viscosité plus faibles et donc acceptables. En revanche, on a très largement augmenté la quantité de dispersant libre en phase aqueuse : une telle suspension va dégrader l'imprimabilité du papier, couché à partir d'une sauce de couchage réalisée avec cette suspension aqueuse de carbonate de calcium.

Selon l'essai n° 3, on a obtenu les meilleurs résultats, à la fois en terme d'extrait sec (valeur la plus élevée) et en terme de viscosités (valeurs les plus faibles). De plus, la quantité de dispersant libre a été largement diminuée par rapport aux essais illustrant l'art antérieur : dans ce cas, on contribue à ne pas dégrader l'imprimabilité du papier couché dans l'application finale.

## Exemple 2

Cet exemple illustre l'utilisation selon l'invention d'acide phosphorique, comme agent réduisant la quantité de dispersant acrylique libre, lorsqu'on concentre une suspension aqueuse d'un carbonate de calcium naturel, qui est un marbre de Norvège.

Cet exemple illustre notamment la mise en oeuvre d'un dispersant acrylique D2 qui est :

- un homopolymère de l'acide acrylique,
- totalement neutralisé par la soude,
- et de poids moléculaire en masse égal à 11 000 g/mol (tel que déterminé selon la méthode décrite dans le document WO 2007 / 069037).

Cet exemple illustre aussi la variante de l'invention bien connue de l'homme du métier dans laquelle la suspension initiale de carbonate de calcium est issue d'une étape de broyage, sans agent dispersant. Sa teneur initiale en poids sec de carbonate de calcium est égale à 25 % de son poids total et elle contient 62 % et 92,5 % en poids de particules dont le diamètre est inférieur respectivement à 1 $\mu$m et 2 $\mu$m, tel que mesuré avec un Sedigraph™ 5100 commercialisé par la société MICROMERITICS™.

Pour chacun des essais n° 4 à 6, on réalise la concentration de la suspension aqueuse de carbonate de calcium à partir d'une plaque chauffante ayant une puissance de 0,5 KWatt.

Essai n° 4

Cet essai illustre l'art antérieur et met en oeuvre 0,30 % en poids sec du dispersant D2, introduit dans la suspension avant l'étape de concentration.

Essai n° 5

Cet essai illustre l'art antérieur et met en oeuvre 0,30 % en poids sec du dispersant D2, et 0,1 % en poids sec d'un dispersant phosphaté condensé hydrosoluble qui est l'hexamétaphosphate de sodium (composé préféré dans les documents EP 0 839 956 et WO 2006 / 081501), ces deux produits étant introduits en même temps dans la suspension et ce, avant l'étape de concentration.

Essai n° 6

Cet essai illustre l'invention et met en oeuvre 0,30 % en poids sec du dispersant D2, et 0,1 % en poids sec d'acide phosphorique, ces deux produits étant introduits en même temps dans la suspension et ce, avant l'étape de concentration.

Pour chacun des essais, on détermine l'extrait sec final de chaque suspension, de même que ses viscosités Brookfield™ à 10 et 100 tours par minute (notées μ10 et μ100), et le pourcentage de dispersant libre (voir tableau 2).

**Tableau 2**

| Essai n° | 4 | 5 | 6 |
|---|---|---|---|
| Art Antérieur (AA) / Invention (IN) | AA | AA | IN |
| Extrait sec (%) | 65,5 | 67,0 | 67,5 |
| μ10 (mPa.s) | 17 800 | 15 700 | 9 200 |
| μ100 (mPa.s) | 2 680 | 2 350 | 1 400 |
| Dispersant libre (%) | 41,0 | 45,7 | 35,1 |

Comme pour l'exemple 1, on constate que les meilleurs résultats sont obtenus lorsqu'on met en oeuvre de l'acide phosphorique. Selon l'essai n° 6, on obtient en effet l'extrait sec le plus élevé, les viscosités les plus faibles, tout en minimisant le taux de dispersant libre. On démontre aussi que l'hexamétaphosphate de sodium conduit à une augmentation de ce taux, et ne peut donc convenir pour la présente invention.

**Exemple 3**

Cet exemple illustre l'utilisation selon l'invention d'acide phosphorique, comme agent réduisant la quantité de dispersant libre, lorsqu'on concentre une suspension aqueuse d'un carbonate de calcium naturel, qui est un marbre de Norvège.

Cet exemple illustre notamment la mise en oeuvre d'un dispersant acrylique D3 qui est :

- un copolymère de l'acide acrylique et de l'anhydride maléique (dans un ratio massique 70 / 30),
- totalement neutralisé par la soude,
- et de poids moléculaire en masse égal à 15 600 g/mol (tel que déterminé selon la méthode décrite dans le document WO 2007 / 069037).

Cet exemple illustre aussi la variante de l'invention bien connue de l'homme du métier dans laquelle la suspension initiale de carbonate de calcium est issue d'une étape de broyage, sans agent dispersant. Sa teneur initiale en poids sec de carbonate de calcium est égale à 15 % de son poids total et elle contient 73 % et 96 % en poids de particules dont le diamètre est inférieur respectivement à 1 μm et 2 μm, tel que mesuré avec un Sedigraph™ 5100 commercialisé par la société MICROMERITICS™.

Pour chacun des essais n° 7 et 8, on réalise la concentration de la suspension aqueuse de carbonate de calcium à partir d'un évaporateur EPCON™.

Essai n° 7

Cet essai illustre l'art antérieur et met en oeuvre 0,6 % en poids sec du dispersant D3, introduit dans la suspension avant l'étape de concentration.

Essai n° 8

Cet essai illustre l'invention et met en oeuvre 0,6 % en poids sec du dispersant D3, et 0,26 % en poids sec d'acide phosphorique, ces deux produits étant introduits en même temps dans la suspension et ce, avant l'étape de concentration.

Pour chacun des essais, on détermine l'extrait sec final de chaque suspension, de même que ses viscosités Brookfield™ à 10 et 100 tours par minute (notées μ10 et μ100), et le pourcentage de dispersant libre (voir tableau 3).

**Tableau 3**

| Essai n° | 7 | 8 |
|---|---|---|
| Art Antérieur (AA) / Invention (IN) | AA | IN |
| Extrait sec (%) | 65,6 | 72,1 |
| $\mu$10 (mPa. s) | 910 | 180 |
| $\mu$100 (mPa.s) | 540 | 180 |
| Dispersant libre (%) | 35,8 | 17,5 |

On constate que l'utilisation d'acide phosphorique selon l'essai n° 8 a permis d'augmenter l'extrait sec et de diminuer les viscosités de la suspension, tout en faisant chuter de manière drastique le taux de dispersant acrylique libre en phase aqueuse.

**Exemple 5**

Cet exemple illustre l'utilisation selon l'invention d'acide phosphorique, comme agent réduisant la quantité de dispersant libre, lorsqu'on concentre une suspension aqueuse d'un carbonate de calcium naturel, qui est un marbre d'Italie.

Cet exemple illustre, lors d'une étape de concentration ultérieure, la mise en oeuvre d'un dispersant acrylique D4 qui est :

- un homopolymère de l'acide acrylique,
- dont 45 % en mole des sites carboxyliques sont neutralisés par la soude, le complément à 100 % restant sous forme non neutralisé,
- et de poids moléculaire en masse égal 10 000 g/mol (tel que déterminé selon la méthode décrite dans le document WO 2007/069037).

Cet exemple illustre aussi la variante de l'invention bien connue de l'homme du métier dans laquelle la suspension initiale de carbonate de calcium est issue d'une étape de broyage, en présence d'un agent dispersant. La suspension aqueuse initiale de carbonate de calcium résulte en effet d'une première étape de broyage en présence de 0,35 % en poids sec d'un agent d'aide au broyage (par rapport au poids sec de carbonate de calcium) qui est un homopolymère de l'acide acrylique, de poids moléculaire égal à 9 000 g/mole, et dont les pourcentages en mole des sites neutralisés sont égaux à 50 % par la soude, 15 % par la chaux, 15 % par l'hydroxyde de magnésium (soit 20 % en mole de sites carboxyliques non neutralisés). Ladite suspension présente alors une teneur en poids sec de carbonate de calcium égale à 35 % de son poids total, et une granulométrie telle que 85,5 % en poids des particules ont un diamètre moyen inférieur à 1 $\mu$m (mesurée à partir d'un Sedigraph™ 5100 commercialisé par la société MICROMERITICS™).

Pour chacun des essais n° 9 à 10, on réalise la concentration de la suspension aqueuse de carbonate de calcium à partir d'une plaque chauffante ayant une puissance de 0,5 KWatt.

Essai n° 9

Cet essai illustre l'art antérieur et met en oeuvre 0,42 % en poids sec du dispersant D4, et 0,18 % en poids sec d'un dispersant phosphaté condensé hydrosoluble qui est l'hexamétaphosphate de sodium (composé préféré dans les documents EP 0 839 956 et WO 2006 / 081501), l'hexamétaphosphate de sodium et D1 étant introduits dans cet ordre et ce, pendant l'étape de concentration.

Essai n° 10

Cet essai illustre l'invention et met en oeuvre 0,42 % en poids sec du dispersant D4, et 0,18 % en poids sec d'acide phosphorique, l'acide phosphorique et D4 étant introduits dans cet ordre et ce, au cours de l'étape de concentration.

Pour chacun des essais, on détermine l'extrait sec final de chaque suspension, de même que ses viscosités Brookfield™ à 10 et 100 tours par minute (notées $\mu$10 et $\mu$100), et le pourcentage de dispersant libre (voir tableau 4).

**Tableau 4**

| Essai n° | 9 | 10 |
|---|---|---|
| Art Antérieur (AA) / Invention (IN) | AA | IN |
| Extrait sec (%) | 70,7 | 70,9 |
| $\mu$10 (mPa.s) | 9 180 | 1 540 |
| $\mu$100 (mPa.s) | 1 640 | 450 |
| Dispersant libre (%) | 36,0 | 10,6 |

Les meilleurs résultats sont obtenus pour l'essai n° 10, qui conduit à l'extrait sec le plus élevé associé aux viscosités les plus basses, tout en permettant de diminuer largement la quantité de dispersant libre.

**Revendications**

1. Utilisation d'acide phosphorique dans un procédé de concentration d'une dispersion ou d'une suspension aqueuse de carbonate de calcium en présence d'au moins un dispersant acrylique, comme agent permettant de réduire la quantité de dispersant libre.

2. Utilisation selon la revendication 1, **caractérisée en ce qu'**on utilise de 0,05 % à 1 % préférentiellement de 0,1 % à 0,6 % en poids sec d'acide phosphorique, par rapport au poids sec de carbonate de calcium.

3. Utilisation selon l'une des revendications 1 ou 2, **caractérisée en ce qu'**on utilise de 0,05 % à 1 %, préférentiellement de 0,1 % à 0,6 % en poids sec du dispersant acrylique, par rapport au poids sec de carbonate de calcium.

4. Utilisation selon l'une des revendications 1 à 3, **caractérisée en ce que** le dispersant acrylique et l'acide phosphorique sont introduits dans la dispersion ou la suspension aqueuse de carbonate de calcium, avant et / ou pendant l'étape de concentration.

5. Utilisation selon l'une des revendications 1 à 4, **caractérisée en ce que** l'acide phosphorique est introduit dans la dispersion ou la suspension aqueuse de carbonate de calcium avant et / ou en même temps que le dispersant acrylique.

6. Utilisation selon l'une des revendications 1 à 5, **caractérisée en ce que** le dispersant acrylique consiste en au moins un homopolymère de l'acide (méth)acrylique et / ou au moins un copolymère de l'acide (méth)acrylique avec un autre monomère.

7. Utilisation selon l'une des revendications 1 à 6, **caractérisée en ce que** le carbonate de calcium est choisi parmi un carbonate de calcium naturel, synthétique et leurs mélanges, préférentiellement **en ce qu'**il est un carbonate de calcium naturel, très préférentiellement **en ce qu'**il est un carbonate de calcium naturel choisi parmi le marbre, la craie, le calcaire, la calcite et leurs mélanges.

8. Utilisation selon l'une des revendications 1 à 7, **caractérisée en ce que** la teneur initiale en poids sec de carbonate de calcium de la dispersion ou de la suspension aqueuse est au plus égale à 50 % de son poids total, et **en ce que** sa teneur finale en poids sec de carbonate de calcium après concentration est au moins égale à 60 %, préférentiellement 70 %, très préférentiellement 72 % de son poids total.

9. Utilisation selon l'une des revendications 1 à 8, **caractérisée en ce qu'**elle a lieu dans un procédé de concentration d'une suspension aqueuse de carbonate de calcium, préalablement obtenue par broyage sans agent de broyage, et ayant une teneur initiale en poids sec de carbonate de calcium au plus égale à 30 % de son poids total.

10. Utilisation selon l'une dés revendications 1 à 8, **caractérisée en ce qu'**elle a Heu dans un procédé de concentration d'une suspension aqueuse de carbonate de calcium, préalablement obtenue par broyage en présence d'un agent de broyage, et ayant une teneur initiale en poids sec de carbonate de calcium au plus égale à 50 % de son poids total et au moins égale à 30 % de son poids total.

11. Utilisation selon l'une des revendications 1 à 10, **caractérisée en ce que** la concentration de la dispersion ou de la suspension aqueuse de carbonate de calcium est réalisée par des moyens mécaniques et / ou thermiques.

12. Dispersion ou suspension aqueuse de carbonate de calcium, contenant au moins un dispersant acrylique, un agent réducteur de la quantité de dispersant libre consistant en l'acide phosphorique, et **caractérisée en ce qu'**elle présente un taux de dispersant libre, telle que mesuré par la méthode TOC, inférieure à 40 %, préférentiellement 30 %, très préférentiellement 12 %, et **en ce que** sa teneur en poids sec de carbonate de calcium est au moins égale à 60 %, préférentiellement 70 %, très préférentiellement 72 % de son poids total.

13. Dispersion ou suspension aqueuse de carbonate de calcium selon la revendication 12, **caractérisée en ce qu'**elle contient de 0,05 % à 1 %, préférentiellement de 0,1 % à 0,6 % en poids sec d'acide phosphorique par rapport au poids sec de carbonate de calcium.

14. Dispersion ou suspension aqueuse de carbonate de calcium selon l'une des revendications 12 ou 13, **caractérisée en ce qu'**elle contient de 0,05 % à 1 %, préférentiellement de 0,1 % à 0,6 % en poids sec du dispersant acrylique, par rapport au poids sec de carbonate de calcium.

15. Dispersion ou suspension aqueuse de carbonate de calcium selon l'une des revendications 12 à 14, **caractérisée en ce que** le dispersant acrylique consiste en au moins un homopolymère de l'acide (méth)acrylique et / ou au moins un copolymère de l'acide (méth)acrylique avec un autre monomère.

16. Dispersion ou suspension aqueuse de carbonate de calcium selon l'une des revendications 12 à 15, **caractérisée en ce que** le carbonate de calcium est choisi parmi un carbonate de calcium naturel, synthétique et leurs mélanges, préférentiellement **en ce qu'**il est un carbonate de calcium naturel, très préférentiellement **en ce qu'**il est un carbonate de calcium naturel choisi parmi le marbre, la craie, le calcaire, la calcite et leurs mélanges.

**Patentansprüche**

1. Verwendung von Phosphorsäure bei einem Verfahren zum Aufkonzentrieren einer wässrigen Dispersion oder Suspension von Calciumcarbonat in Gegenwart mindestens eines Acryl-Dispergiermittels als Mittel zur Verringerung der Menge an freiem Dispergiermittel.

2. Verwendung nach Anspruch 1, **dadurch gekennzeichnet, dass** man 0,05 bis 1 Trockengew.-% und vorzugsweise 0,1 bis 0,6 Trockengew.-% Phosphorsäure, bezogen auf das Trockengewicht von Calciumcarbonat, verwendet.

3. Verwendung nach Anspruch 1 oder 2, **dadurch gekennzeichnet, dass** man 0,05 bis 1 Trockengew.-% und vorzugsweise 0,1 bis 0,6 Trockengew.-% Acryl-Dispergiermittel, bezogen auf das Trockengewicht von Calciumcarbonat, verwendet.

4. Verwendung nach einem der Ansprüche 1 bis 3, **dadurch gekennzeichnet, dass** das Acryl-Dispergiermittel und die Phosphorsäure vor und/oder während des Aufkonzentrierungsschritts in die wässrige Dispersion oder Suspension von Calciumcarbonat eingetragen werden.

5. Verwendung nach einem der Ansprüche 1 bis 4, **dadurch gekennzeichnet, dass** die Phosphorsäure vor und/oder gleichzeitig mit dem Acryl-Dispergiermittel in die wässrige Dispersion oder Suspension von Calciumcarbonat eingetragen wird.

6. Verwendung nach einem der Ansprüche 1 bis 5, **dadurch gekennzeichnet, dass** das Acryl-Dispergiermittel aus mindestens einem Homopolymer von (Meth)acrylsäure und/oder mindestens einem Copolymer von (Meth)acrylsäure mit einem anderen Monomer besteht.

7. Verwendung nach einem der Ansprüche 1 bis 6, **dadurch gekennzeichnet, dass** das Calciumcarbonat aus natürlichem Calciumcarbonat, synthetischem Calciumcarbonat und Mischungen davon ausgewählt wird und es sich vorzugsweise um ein natürliches Calciumcarbonat und ganz besonders bevorzugt um ein natürliches Calciumcarbonat, das aus Marmor, Kreide, Kalkstein, Kalzit und Mischungen davon ausgewählt ist, handelt.

**8.** Verwendung nach einem der Ansprüche 1 bis 7, **dadurch gekennzeichnet, dass** der anfängliche Calciumcarbonat-Trockengewichtsgehalt der wässrigen Dispersion oder Suspension höchstens 50% ihres Gesamtgewichts beträgt und jeder letztendlicher Calciumcarbonat-Trockengewichtsgehalt nach dem Aufkonzentrieren mindestens 60%, vorzugsweise 70% und ganz besonders bevorzugt 72% ihres Gesamtgewichts beträgt.

**9.** Verwendung nach einem der Ansprüche 1 bis 8, **dadurch gekennzeichnet, dass** sie bei einem Verfahren zum Aufkonzentrieren einer vorher durch Mahlen ohne Mahlmittel erhaltenen wässrigen Suspension von Calciumcarbonat mit einem anfänglichen Calciumcarbonat-Trockengewichtsgehalt von höchstens 30% ihres Gesamtgewichts erfolgt.

**10.** Verwendung nach einem der Ansprüche 1 bis 8, **dadurch gekennzeichnet, dass** sie bei einem Verfahren zum Aufkonzentrieren einer vorher durch Mahlen in Gegenwart eines Mahlmittels erhaltenen wässrigen Suspension von Calciumcarbonat mit einem anfänglichen Calciumcarbonat-Trockengewichtsgehalt von höchstens 50% ihres Gesamtgewichts und mindestens 30% ihres Gesamtgewichts erfolgt.

**11.** Verwendung nach einem der Ansprüche 1 bis 10, **dadurch gekennzeichnet, dass** das Aufkonzentrieren der wässrigen Dispersion oder Suspension von Calciumcarbonat durch mechanische und/oder thermische Mittel bewerkstelligt wird.

**12.** Wässrige Dispersion oder Suspension von Calciumcarbonat, enthaltend mindestens ein Acryl-Dispergiermittel und ein Mittel zur Verringerung der Menge an freiem Dispergiermittel, das aus Phosphorsäure besteht, **dadurch gekennzeichnet, dass** sie einen Gehalt an freiem Dispergiermittel gemäß Messung nach der TOC-Methode von weniger als 40%, vorzugsweise 30% und ganz besonders bevorzugt 12% aufweist und ihr Calciumcarbonat-Trockengewichtsgehalt mindestens 60%, vorzugsweise 70% und ganz besonders bevorzugt 72% ihres Gesamtgewichts beträgt.

**13.** Wässrige Dispersion oder Suspension von Calciumcarbonat nach Anspruch 12, **dadurch gekennzeichnet, dass** sie 0,05 bis 1 Trockengew.-% und vorzugsweise 0,1 bis 0,6 Trockengew.-% Phosphorsäure, bezogen auf das Trockengewicht von Calciumcarbonat, enthält.

**14.** Wässrige Dispersion oder Suspension von Calciumcarbonat nach Anspruch 12 oder 13, **dadurch gekennzeichnet, dass** sie 0,05 bis 1 Trockengew.-% und vorzugsweise 0,1 bis 0,6 Trockengew.-% Acryl-Dispergiermittel, bezogen auf das Trockengewicht von Calciumcarbonat, enthält.

**15.** Wässrige Dispersion oder Suspension von Calciumcarbonat nach einem der Ansprüche 12 bis 14, **dadurch gekennzeichnet, dass** das Acryl-Dispergiermittel aus mindestens einem Homopolymer von (Meth)acrylsäure und/oder mindestens ein Copolymer von (Meth)acrylsäure mit einem anderen Monomer besteht.

**16.** Wässrige Dispersion oder Suspension von Calciumcarbonat nach einem der Ansprüche 12 bis 15, **dadurch gekennzeichnet, dass** das Calciumcarbonat aus natürlichem Calciumcarbonat, synthetischem Calciumcarbonat und Mischungen davon ausgewählt ist und es sich vorzugsweise um einem natürliches Calciumcarbonat und ganz besonders bevorzugt um ein natürliches Calciumcarbonat, das aus Marmor, Kreide, Kalkstein, Kalzit und Mischungen davon ausgewählt ist, handelt.

**Claims**

**1.** Use of phosphoric acid in a method for concentrating an aqueous dispersion or suspension of calcium carbonate in the presence of at least one acrylic dispersing agent, as an agent making it possible to reduce the amount of free dispersing agent.

**2.** Use according to claim 1, **characterized in that** from 0.05% to 1%, preferentially from 0.1% to 0.6% by dry weight of phosphoric acid is used, in relation to the dry weight of calcium carbonate.

**3.** Use according to one of the claims 1 or 2, **characterized in that** from 0.05% to 1%, preferentially from 0.1% to 0.6% by dry weight of acrylic dispersing agent is used, in relation to the dry weight of calcium carbonate.

**4.** Use according to one of the claims 1 to 3, **characterized in that** the acrylic dispersing agent and the phosphoric acid are introduced into the aqueous dispersion or suspension of calcium carbonate, before and/or during the step of concentration.

5. Use according to one of the claims 1 to 4, **characterized in that** the phosphoric acid is introduced into the aqueous dispersion or suspension of calcium carbonate before and/or at the same time as the acrylic dispersing agent.

6. Use according to one of the claims 1 to 5, **characterized in that** the acrylic dispersing agent consists of at least one homopolymer of (meth)acrylic acid and/or at least one copolymer of (meth)acrylic acid with another monomer.

7. Use according to one of the claims 1 to 6, **characterized in that** the calcium carbonate is chosen from among a natural or synthetic calcium carbonate and mixtures thereof, preferentially **in that** it is a natural calcium carbonate, very preferentially **in that** it is a natural calcium carbonate chosen from among marble, chalk, limestone, calcite, and mixtures thereof.

8. Use according to one of the claims 1 to 7, **characterized in that** the aqueous dispersion or suspension's initial content of calcium carbonate by dry weight is no greater than 50% of its total weight, and **in that** its final content of calcium carbonate by dry weight is equal to or greater than 60%, preferentially 70%, and very preferentially 72% of its total weight.

9. Use according to one of the claims 1 to 8, **characterized in that** it takes place within a method of concentrating of an aqueous suspension of calcium carbonate, previously obtained by grinding without grinding agent, and with an initial content of calcium carbonate by dry weight no greater than 30% of its total weight.

10. Use according to one of the claims 1 to 8, **characterized in that** it takes place within a method of concentrating of an aqueous suspension of calcium carbonate, previously obtained by grinding in the presence of a grinding agent, and with an initial content of calcium carbonate by dry weight no greater than 50% of its total weight and no less than 30% of its total weight.

11. Use according to one of the claims 1 to 10, **characterized in that** the concentration of the aqueous dispersion or suspension of calcium carbonate is carried out by mechanical and/or thermal means.

12. An aqueous dispersion or suspension of calcium carbonate, containing at least one acrylic dispersing agent, one agent for reducing the amount of free dispersing agent consisting of phosphoric acid, and **characterized in that** it has a level of free dispersing agent, as measured by the TOC method, less than 40%, preferentially 30%, and very preferentially 12%, and **in that** its content of calcium carbonate by dry weight is equal to or greater than 60%, preferentially 70%, very preferentially 72% of its total weight.

13. An aqueous dispersion or suspension of calcium carbonate according to claim 12, **characterized in that** it contains from 0.05% to 1%, preferentially from 0.1% to 0.6% by dry weight of phosphoric acid in relation to the dry weight of calcium carbonate.

14. An aqueous dispersion or suspension of calcium carbonate according to one of the claims 12 or 13, **characterized in that** it contains from 0.05% to 1%, and preferentially from 0.1% to 0.6% by dry weight of the acrylic dispersing agent in relation to the dry weight of calcium carbonate.

15. An aqueous dispersion or suspension of calcium carbonate according to one of the claims 12 to 14, **characterized in that** the acrylic dispersing agent consists of at least one homopolymer of (meth)acrylic acid and/or at least one copolymer of (meth)acrylic acid with another monomer.

16. An aqueous dispersion or suspension of calcium carbonate according to one of the claims 12 to 15, **characterized in that** the calcium carbonate is chosen from among a natural or synthetic calcium carbonate and mixtures thereof, preferentially **in that** it is a natural calcium carbonate, very preferentially **in that** it is a natural calcium carbonate chosen from among marble, chalk, limestone, calcite, and mixtures thereof.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5043017 A
- US 5156719 A
- WO 9829601 A
- WO 9741302 A
- US 3661610 A
- JP 62279834 A
- CN 1884085

- EP 0839956 A
- WO 2006081501 A
- EP 1347835 A
- WO 2007069037 A
- EP 1294476 A

**Littérature non-brevet citée dans la description**

- Neutral groundwood papers : practical and chemical aspects. International Paper and Coatings Chemistry Symposium, 5th, Montreal, QC, Canada. Pulp and Paper Technical Association of Canada, 16 Juin 2003

- The Chemical Structure and Properties of Condensed Inorganic Phosphates. **I.S. KULAEV ; V.M. VAGABOV ; T.V. KULAKOVSKAYA.** The Biochemistry of Inorganic Polyphosphates. John Wiley & Sons, Ltd, 2004